Europäisches Patentamt

European Patent Office

Office européen des brevets

(19)

(11) Veröffentlichungsnummer: **0 354 521**
**A2**

(12) # EUROPÄISCHE PATENTANMELDUNG

(21) Anmeldenummer: **89114588.0**

(22) Anmeldetag: **07.08.89**

(51) Int. Cl.4: **C09J 177/08 , C08L 77/08 ,**
**//(C09J177/08,123:08,125:08),**
**(C08L77/08,23:08,25:08)**

(30) Priorität: **10.08.88 DE 3827167**

(43) Veröffentlichungstag der Anmeldung:
**14.02.90 Patentblatt 90/07**

(84) Benannte Vertragsstaaten:
**AT BE CH DE FR IT LI NL SE**

(71) Anmelder: **RXS Schrumpftechnik-Garnituren GmbH**
**Profilstrasse 4**
**D-5800 Hagen 1(DE)**

(72) Erfinder: **Binnewirtz, Ralf Jürgen, Dr.**
**Anratherstrasse 72**
**D-4150 Krefeld(DE)**
Erfinder: **Kupczyk, Andreas**
**Hengsteyerstrasse 41**
**D-5800 Hagen(DE)**
Erfinder: **Pieper, Detlef, Dr.**
**Am Rabersbach 18**
**D-8633 Rödental(DE)**

(74) Vertreter: **Fuchs, Franz-Josef, Dr.-Ing. et al**
**Postfach 22 13 17**
**D-8000 München 22(DE)**

(54) **Abrutschfester Schmelzkleber,insbesondere für Beschichtungen bei Schrumpfprodukten.**

(57) Bei der Erfindung handelt es sich um einen Schmelzkleber, insbesondere für Beschichtungen bei Schrumpfprodukten, der einen an sich bekannten, auf Dimerfettsäuren basierenden Polyamidschmelzkleber enthält, wobei Zusätze aus Terpolymer und ein klebrigmachendes Harz beigemengt sind. Dadurch werden Forderungen bezüglich hoher Rutschfestigkeit und hoher Schälfestigkeit erfüllt.

FIG 1

EP 0 354 521 A2

## Abrutschfester Schmelzkleber, insbesondere für Beschichtungen bei Schrumpfprodukten.

Die Erfindung betrifft einen Schmelzkleber, insbesondere für Beschichtungen bei Schrumpfprodukten, der einen an sich bekannten auf Dimerfettsäuren basierenden Polyamidschmelzkleber enthält.

Handelsübliche und an sich bekannte Schmelzkleber für Schrumpfprodukte sind vorzugsweise auf der Basis spezieller Polyamide mit einem anwendungsbezogenen Aufschmelzbereich formuliert. Die Erfahrung lehrt, daß ein Schmelzkleber zum Bestehen eines Rutschtestes, wie er später näher beschrieben wird, eine hohe Kohäsion bei der Prüftemperatur von 150°C besitzen muß. Mit bisher bekannten extrudierbaren und vergleichsweise hochviskosen Schmelzklebern können diese Bedingungen kaum erreicht werden. Derartige Klebstoffe, die z.B. bei Koextrusion in Schrumpfschläuchen eingelagert werden, sind vorzugsweise auf der Basis von Fettsäure-Polyamiden aufgebaut. Diese Polyamid-Hotmelts zeigen allerdings keine ausreichende Kohäsion, auch nicht nach einer Behandlung mit Elektronenstrahlen. Demgegenüber vernetzen Klebstoffe auf der Basis von Ethylenkopolymeren bei Elektronenbestrahlung zwar unter starker Erhöhung der Kohäsion, verlieren aber gleichzeitig einen beträchtlichen Anteil ihrer Klebkraft (Adhäsion). So kann beispielsweise das Abrutschen eines durch Koextrusion erzeugten wärmeschrumpfenden Schlauches aus einer äußeren wärmeschrumpfenden Schicht und einer inneren Kleberschicht auf einem umgebenen Substrat mit sich stark ändernden Querschnitten nicht verhindert werden.

So bleibt festzuhalten, daß von den derzeit erhältlichen Schmelzklebstoffen, insbesondere solchen auf der Basis von Polyamid, keiner gleichzeitig die nachstehend genannten Anforderungen erfüllen kann.

So besteht für vorliegende Erfindung die Aufgabe, einen abrutschfesten Schmelzkleber zu schaffen, der eine hohe Adhäsion, insbesondere zu Kupfer, Polyethylen oder vernetztem Polyethylen, eine hohe Kohäsion bzw. Rutschfestigkeit und eine gute Koextrudierbarkeit im unvernetzten Zustand besitzt. Die gestellte Aufgabe wird mit einem abrutschfesten Schmelzkleber der eingangs beschriebenen Art dadurch gelöst, daß dem jeweiligen an sich bekannten Polyamidschmelzkleber ein Terpolymer und ein klebrig machendes Harz beigemengt ist.

Sei der erfindungsgemäßen Lösung des Problems wird die Kohäsion des Schmelzklebers durch eine teilweise Vernetzung nach der Extrusion erhöht und dies geschieht vorzugsweise gleichzeitig z.B. mit der üblicherweise durch Elektronenstrahlen erfolgenden Vernetzung der später schrumpffähigen Polymerschicht. Für die Trägerschicht des erfindungsgemäßen Schmelzklebers, die insbesondere aus wärmeschrumpfendem Material besteht, werden üblicherweise vernetzte, insbesondere strahlenvernetzte, Polyolefinmischungen verwendet. So kann beispielsweise mit den angegebenen Werkstoffen gemäß der Erfindung durch Koextrusion ein wärmeschrumpfender Schlauch aus zwei Schichten hergestellt werden, wobei die äußere Schicht die wärmeschrumpfenden Eigenschaften bewirkt und die innere Schicht eine gute Klebkraft (Adhäsion) zu den umschrumpfenden Substraten aufweist. Bei Substraten mit sich stark verändernden Querschnitten wird nun ein Abrutschen des Schlauches durch die hohe innere Festigkeit (Kohäsion) der Innenschicht im Bereich der Schrumpftemperatur verhindert. Ein spezielles Anforderungsprofil für einen wärmeschrumpfenden Schlauch einschließlich Klebstoff ist beispielsweise in den Vorschriften für Materialeigenschaften und Materialprüfungen der deutschen Bundespost mit der Bezeichnung TL 5935-3004 fixiert. Um die darin festgelegten Forderungen zu erfüllen, wird nun gemäß der Erfindung ein an sich bekannter und allgemein erhältlicher Polyamidschmelzklebstoff, der nicht in nennenswerten Anteilen einer Strahlenvernetzung unterliegt, mit einer vernetzungsfähigen Komponente modifiziert. Als vernetzungsfähiger Zusatz wird gemäß der Erfindung ein Terpolymer verwendet, das je nach erforderlicher Strahlendosis für die äußere Trägerschicht und nach Ausgangsviskosität des Polyamids in Gew.-% von 20 - 60 % zugesetzt wird, um eine ausreichende Kohäsion nach der Elektronenbestrahlung zu gewährleisten. Als besonders geeignet erweist sich ein Terpolymer auf der Basis Ethylen, ungesättigter Carbonsäureester und ungesättigter Dicarbonsäureanhydrid. Dieses Terpolymer verbessert auch die Extrudierbarkeit durch eine Erhöhung der Schmelzviskosität, die hiermit den Polymerviskositäten von üblichen Extrusionsmaterialien vor der Strahlenvernetzung vergleichbar ist.

Durch eine solche Maßnahme verliert der auf diese Weise modifizierte und vernetzte Schmelzkleber (Hotmelt) bedeutend an Klebkraft, so daß die geforderten Schälfestigkeitswerte für die Substrate Polyethylen und Kupfer so nicht mehr erreicht werden. Um gleichzeitig die Anforderungen an die Schälfestigkeiten zu erfüllen, wird gemäß der Erfindung ein klebrig machender Zusatz beigemischt, der nicht vernetzt ist und in der vernetzten Schmelzklebermatrix seine Klebkraft entfalten kann. Als geeigneter Zusatz (Tackifier) wird gemäß der Erfindung ein aromatisches Kohlenwasserstoff-Harz, z.B. Styrolcopolymerisat, in Gew.-% von 15 - 20 % zugesetzt. Auf diese Weise wird nun die erforderliche Klebkraft vermittelt.

Derartige erfindungsgemäße Schmelzkleber besitzen folgende Zusammensetzung:
50 - 75 Gew.-% handelsübliche Polyamidschmelzkleber, basierend auf Dimerfettsäuren.

20 - 50 Gew.-% Ethylenterpolymer, bestehend aus: 55 - 92 Gew.-% Ethylen und bevorzugt 5 - 35 Gew.-% Comonomer, z.B. Vinylacetat oder ungesättigte Carbonsäureester (z.B. Ethylacrylat, n - Butylacrylat) und 3 - 10 Gew.-% Termonomer, z.B. ungesättigte Carbonsäure - bzw. Carbonsäureanhydrid oder Dicarbonsäure bzw. Dicarbonsäureanhydrid (z.B. Maleinsäureanhydrid)

5 - 25 Gew.-% klebrigmachendes Harz (Tackifier) auf der Basis aromatischer Kohlenwasserstoffe (Styrolcopolymerisate.

Die nachstehende Tabelle zeigt einige Eigenschaften von Klebermischungen, die je nach Beimischungen die Forderungen nicht, bzw. mehr oder weniger erfüllen. Aufgeführt sind hier der Rutschtest und der Test bezüglich der Schälfestigkeit, die nach der bereits aufgeführten Postrichtlinie durchgeführt wurden. Die Testmodalitäten werden anschließend anhand von Figuren näher erläutert. Weiterhin ist in der Tabelle der Schmelzindex MFI angegeben, der angibt, welche Viskosität das entsprechende Material bei einer Prüftemperatur von 190° C und einer Belastung von 2,16 kg besitzt. Die in der Tabelle angegebene Zahl bedeutet dabei jeweils die Menge Material in Gramm, die bei den angegebenen Prüfbedingungen in 10 Minuten durch eine entsprechende Düse ausgedrückt wird.

| Klebermischung | 1 | 2 | 3 | 4 | 5 |
|---|---|---|---|---|---|
| Polyamidschmelzkleber | 99,9 | 69,9 | 50,0 | 55,0 | 50,0 |
| Terpolymer | - | 30,0 | 49,9 | 29,9 | 29,9 |
| Styrolharz | - | - | - | 15,0 | 20,0 |
| Antioxidans | 0,1 | 0,1 | 0,1 | 0,1 | 0,1 |
| MFI/190/2,16 | >300 | 118 | 85 | 108 | 149(unvern.) 1,7(vern.) |
| Rutschtest bestanden: | nein | ja | nein | ja | ja |
| Schälfestigkeit (N/25mm) | | | | | |
| - auf Polyethylen | 150-200 | 230-260 | 180-220 | 160-200 | > 300 |
| - auf Kupfer | 100-160 | 40- 50 | 30- 40 | 70- 90 | 200 |

Aus dieser Tabelle ist zu entnehmen, daß die Klebermischungen 1 und 3 den Rutschtest nicht bestehen. Die Klebermischungen 2 und 4 bestehen wohl den Rutschtest und die Werte beim Schältest auf Polyethylen (geforderter Wert:> 150 N/25mm) jedoch nicht die Schälfestigkeit auf Kupfer, die > 100 N/25mm betragen müßte. Allein die als Beispiel aufgeführte Klebermischung 5 gemäß der Erfindung mit den dort angegebenen Gewichtsverteilungen erfüllt alle gestellten Bedingungen. Durch eine entsprechende Einstellung der Mischungsverhältnisse gemäß der Patentansprüche lassen sich Klebermischungen je nach gestellter Forderung weiter modifizieren.

Die Testforderungen werden anhand von 2 Figuren näher erläutert.

Fig. 1 zeigt die Anordnung für den Rutschtest,

Fig. 2 zeigt die Anordnung für den Schältest.

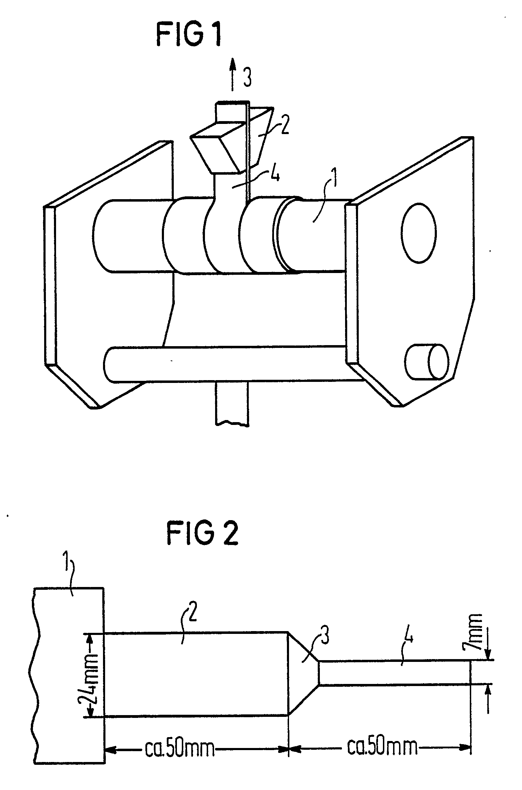

Die Fig. 1 verdeutlicht die Anordnung für den Schältest, bei dem ein schlauchförmiger Prüfling 4 auf einem Prüfdorn 1 mit seiner erfindungsgemäßen Kleberinnenschicht aufgeklebt ist. Mit Hilfe einer Einspannvorrichtung 2 wird nun der Prüfling 4 vom Dorn in Richtung 3 abgezogen. Der dabei zu überwindende Schälwiderstand wird gemessen und dieser Wert entspricht jeweils der Schälfestigkeit, die in der vorstehenden Tabelle angegeben ist, wobei der Prüfling über einer Breite von 25 mm aufgeklebt ist. Der in der bereits genannten Prüfvorschrift genannte Grenzwert für die Schälfestigkeit darf bei einer Polyethyleneoberfläche 150 N/25mm und bei Kupfer 100 N/25mm nicht unterschreiten.

Die Fig. 2 zeigt die Vorrichtung, mit der der Rutschtest durchgeführt wird. Hier handelt es sich um einen Prüfdorn mit glatter Oberfläche, der in einer Halterung 1 eingespannt ist. Der Prüfdorn besitzt zunächst einen dicken Teil 2 von 24 mm Durchmesser, der in einem Übergangsbereich mit einer Schräge von 45° in einen Dornteil 4 von 7 mm Durchmesser übergeht. Die Längen der beiden Teile 1 bzw. 2 betragen jeweils 50 mm. Der Schrumpfschlauch mit der zu prüfenden Innenschicht aus dem aufgebrachten Schmelzkleber wird in der üblichen Weise auf den Prüfdorn aufgeschrumpft und auf die Länge des Dornes gekürzt. Danach wird der Prüfling im Wärmeofen bei 150° C ca. eine halbe Stunde lang gelagert, und zwar waagerecht und frei im Raum. Bei dieser Prüfung darf die dabei eventuell auftretende Verschiebung des Prüflings nicht größer als 5 mm betragen.

3

**Ansprüche**

1. Schmelzkleber, insbesondere für Beschichtungen bei Schrumpfprodukten, der einen an sich bekannten auf Dimerfettsäuren basierenden Polyamidschmelzkleber enthält,

**dadurch gekennzeichnet,**

daß dem jeweiligen an sich bekannten Polyamidschmelzkleber ein Terpolymer und ein klebrigmachendes Harz beigemengt ist.

2. Schmelzkleber nach Anspruch 1,

**dadurch gekennzeichnet,**

daß ein Ethylenterpolymer als Terpolymer beigemengt ist.

3. Schmelzkleber nach Anspruch 2,

**dadurch gekennzeichnet,**

daß das Ethylenterpolymer besteht aus:

55 - 92 Gew.-% Ethylen

5 - 35 Gew.-% CGomonomer, vorzugsweise Vinylazetat oder ungesättigte Carbonsäureester, wie z.B. Ethylacrylat oder n-Buthylacrylat und

3 - 10 Gew.-% Termonomer, vorzugsweise ungesättigte Carbonsäure bzw. Carbonsäureanhydrid oder Dicarbonsäure bzw. Dicarbonsäureanhydrid, wie z.B. Maleinsäureanhydrid.

4. Schmelzkleber nach einem der vorhergehenden Ansprüche,

**dadurch gekennzeichnet,**

daß das klebrigmachende Harz auf der Basis aromatischer Kohlenwasserstoffe beruht.

5. Schmelzkleber nach Anspruch 4,

**dadurch gekennzeichnet,**

daß die aromatischen Kohlenwasserstoffe Styrolcopolymerisate sind.

6. Schmelzkleber nach einem der vorhergehenden Ansprüche,

**dadurch gekennzeichnet,**

daß folgendes Mischungsverhältnis zugrundeliegt:

50 - 75 Gew.-% Polyamidschmelzkleber der an sich bekannten Art, basierend auf Dimerfettsäuren

20 - 50 Gew.-% Terpolymer

5 - 25 Gew.-% klebrig machendes Harz (Tackifier).

## FIG 1

## FIG 2